# FASCICULE DE BREVET EUROPEEN

(11) **EP 2 947 983 B1**
(45) Date de publication et mention de la délivrance du brevet: **17.10.2018**
(21) Numéro de dépôt: 14704618.9
(22) Date de dépôt: 28.01.2014
(51) Int. Cl.: A01B 45/02, A01B 49/04, A01M 1/22, A01M 17/00, A01G 11/00

(54) **SYSTÈME DE NETTOYAGE ET DE DÉSINFECTION DES SOLS**
REINIGUNGS- UND DESINFEKTIONSSYSTEM FÜR BÖDEN
SYSTEM FOR CLEANING AND DISINFECTING SOILS

(30) Priorité: 28.01.2013 FR 1350692
(43) Date de publication de la demande: 02.12.2015
(73) Titulaire: Sekrane, Gérard, 64000 Pau (FR)
(72) Inventeur: SEKRANE, Gérard, 64000 Pau (FR); LARROUDE, Anne-Marie, 64000 Pau (FR)
(74) Mandataire: Gaillarde, Frédéric F. Ch.
(86) Numéro de dépôt international: PCT/FR2014/050154
(87) Numéro de publication internationale: WO 2014/114899

(56) Documents cités:
- DE-A1- 2 328 705
- FR-A5- 2 098 745
- US-A- 4 873 789
- US-A1- 2003 150 156

## Description

L'invention concerne un système de nettoyage et de désinfection des sols, notamment des sols agricoles.

On sait que les organismes pathologiques tels que les nématodes, les vers, les moisissures et pathogènes bactériens contenu dans le sol peuvent causer des dommages économiques considérables aux récoltes.

Pour désinfecter les sols, il est utilisé couramment des pesticides chimiques et des produits phytosanitaires ou encore du bromure de méthyle, produits hautement nocifs qui polluent l'environnement.

Pour remédier aux inconvénients de ces produits nocifs il a été proposé dans le document EP-A-1,479,287 un dispositif de stérilisation des sols comportant un châssis destiné à être tracté sur le sol.

Le châssis comporte des griffes conçues pour pénétrer dans le sol et un générateur de vapeur d'eau relié à chaque griffe par un conduit, pour injecter de la vapeur d'eau dans le sol par l'intermédiaire des griffes.

Bien que ce type de dispositif de stérilisation par vapeur d'eau semble efficace, il présente plusieurs inconvénients.

En effet, un tel dispositif doit embarquer une réserve d'eau importante pour générer de la vapeur, la réserve d'eau représentant une masse importante à déplacer qui demande de l'énergie supplémentaire.

De plus, il semble que l'injection de vapeur d'eau dans le sol favorise la remontée de métaux lourds à la surface du sol.

DE 23 28 705 A1 et US 2003/150156 A1 divulguent un système de nettoyage des sols utilisant des moyens d'électrocution selon le préambule de la revendication 1. US 4 873 789 A divulgue un système de nettoyage des sols au moyen de rayonnement électromagnétique.

Pour pallier notamment ces inconvénients, l'invention propose un système de nettoyage des sols selon la revendication 1 comportant un châssis conçu pour être déplacé sur le sol, le châssis portant au moins un dispositif d'élimination des parasites présents dans le sol, le dispositif d'élimination comportant un moyen d'électrocution conçu pour électrocuter les parasites.

Ainsi, le système de nettoyage des sols selon l'invention permet de nettoyer et préparer un sol, en utilisant ni produits chimiques polluants, ni eau supplémentaire.

Selon une autre caractéristique de l'invention, le moyen d'électrocution comporte au moins une électrode qui est adaptée pour être entraînée en déplacement au dessus du sol pour former des arcs électriques entre l'électrode et les parasites pour éliminer les parasites.

Cette caractéristique permet d'éliminer efficacement les parasites qui sont situés en surface du sol ou à faible profondeur.

Selon une variante, le moyen d'électrocution comporte au moins une électrode qui est adaptée pour être entraînée en déplacement au moins en partie à l'intérieur du sol, pour former des arcs électriques entre l'électrode et les parasites pour éliminer les parasites.

Selon cette variante, l'électrode est tout ou partie enfoncée dans le sol pour atteindre les parasites situés à l'intérieur du sol.

Selon l'invention, le système comporte un dispositif d'extraction des parasites qui est conçu pour extraire les parasites du sol et les entraîner jusqu'au dispositif d'élimination.

Selon une autre caractéristique, le dispositif d'extraction comporte un générateur de champ électromagnétique.

De plus, le générateur de champ électromagnétique est du type électroaimant.

L'électroaimant permet d'extraire les parasites du sol pour les entraîner vers le dispositif d'élimination, permettant ainsi de supprimer les parasites du sol.

En outre, le dispositif d'extraction comporte au moins un moyen d'aspiration d'air complémentaire qui est agencé sur le châssis de façon à entraîner les parasites vers le dispositif d'élimination.

De plus, le dispositif d'élimination comporte un moyen d'électrocution qui est équipé d'au moins un fil électrique nu traversé par un courant électrique pour électrocuter les parasites.

De façon complémentaire, le dispositif d'élimination comporte un moyen de chauffage du type résistif qui est conçu pour émettre de la chaleur vers le sol afin de bruler les parasites.

Aussi, le système de nettoyage des sols est équipé d'au moins un caisson étagé qui comporte de bas en haut, selon un axe perpendiculaire au sol à nettoyer :
- le générateur de champ électromagnétique,
- le moyen de chauffage,
- le moyen d'électrocution formé, et
- le moyen d'aspiration d'air.

La combinaison de ces différents éléments permet d'extraire et d'éliminer les parasites du sol successivement, en un passage.

De plus, le caisson comporte un plateau amovible qui est équipé d'une pluralité de buses d'éjection d'air chaud, et qui est agencé sur une extrémité inférieure du caisson de façon à éjecter de l'air chaud vers le sol.

Selon un autre aspect, le système est équipé d'un dispositif de désinfection des sols qui comporte :
- un générateur d'air sous pression,
- des moyens de chauffage de l'air à une température prédéterminée, et
- au moins une tête d'éjection d'air chaud qui est reliée audit générateur d'air par un conduit et qui est conçue pour envoyer de l'air chaud dans le sol.

Le dispositif de désinfection permet de compléter le nettoyage du sol en éliminant notamment virus et éléments pathogènes.

Complémentairement, le châssis comporte une pluralité de griffes destinées à pénétrer dans le sol, chaque griffe étant équipée d'une tête d'éjection d'air chaud agencée de façon à envoyer de l'air chaud dans le sol.

Ainsi, les griffes permettent d'ouvrir le sol pour que l'air chaud pénètre en profondeur dans le sol.

De plus, la tête d'éjection d'air chaud comporte :
- un premier cylindre qui s'étend axialement selon un axe principal depuis un orifice d'entrée supérieur qui est raccordé au conduit d'arrivée d'air associé, jusqu'à un orifice de sortie inférieur,
- un second cylindre borgne qui enveloppe le premier cylindre et qui s'étend axialement selon l'axe principal depuis une extrémité borgne inférieure agencée en regard de l'orifice de sortie du premier cylindre, jusqu'à un orifice de sortie supérieur de l'air chaud, de sorte que le premier cylindre et le second cylindre délimitent entre eux un circuit cylindrique annulaire de passage de l'air chaud, et
- une coque externe cylindrique s'étendant selon l'axe principal, qui comporte le premier cylindre et le second cylindre et qui est équipée d'une pluralité de buses d'éjection d'air chaud.

Enfin, le premier cylindre, le second cylindre et la coque externe conforment chacun au moins une gorge qui forme une spirale autour de l'axe principal pour accélérer l'écoulement de l'air chaud à travers la tête d'éjection.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en plan de dessus, qui illustre un système de nettoyage des sols comportant un châssis portant une pluralités d'électrodes pour l'élimination des parasites, selon un premier mode de réalisation de l'invention ;
- la figure 2 est une vue schématique en coupe longitudinale, qui illustre le châssis de la figure 1 comportant des griffes et une série d'électrodes agencées au dessus du sol ;
- la figure 3 est une vue schématique de détail en perspective, qui illustre une paire d'électrodes de la figure 1 ;
- la figure 4 est une vue schématique de détail en perspective, qui illustre la paire d'électrodes de la figure 3 en fonctionnement au dessus d'un sillon ;
- la figure 5 est une vue schématique de détail en perspective, qui illustre une paire d'électrodes de la figure 3 comportant une pluralité de picots, selon une variante de réalisation de l'invention ;
- la figure 6 est une vue schématique de détail en perspective, qui illustre une paire d'électrodes comportant des picots en fonctionnement au dessus d'un sillon ;
- la figure 7 est une vue schématique en plan de dessus, qui illustre un système de nettoyage des sols comportant un châssis équipé de trois caissons pour l'élimination et l'extraction des parasites, selon un second mode de réalisation de l'invention ;
- la figure 8 est une vue schématique en perspective éclatée selon un axe vertical, qui illustre un des caissons de la figure 7 ;
- la figure 9 est une vue schématique en coupe longitudinale, qui illustre le châssis de la figure 7 comportant des griffes équipées chacune d'une tête d'éjection d'air chaud ;
- la figure 10 est une vue schématique en coupe axiale verticale, qui illustre une tête d'éjection d'air chaud de la figure 9 ;
- la figure 11 est une vue schématique en perspective, qui illustre un troisième mode de réalisation, mais pas selon l'invention comportant un cylindre tracté ;
- la figure 12 est une vue schématique en coupe longitudinale, qui illustre le cylindre selon le troisième mode de réalisation ;
- la figure 13 est une vue schématique en coupe transversale, qui illustre le système de nettoyage comportant trois caissons formant chacun un tunnel, selon un quatrième mode de réalisation, mais pas selon l'invention ;
- la figure 14 est une vue en perspective, qui illustre un chariot de nettoyage des sols selon un cinquième mode de réalisation, mais pas selon l'invention ;
- la figure 15 est une vue schématique en coupe axiale verticale, qui illustre une buse de soufflage d'une lance de désherbage équipant le chariot de la figure 12 ;
- la figure 16 est une vue en perspective, qui illustre le chariot de nettoyage de la figure 14 selon le cinquième mode de réalisation.

Dans la description et les revendications, on adoptera à titre non limitatif la terminologie longitudinal, vertical et transversal en référence au trièdre L, V, T indiqué aux figures.

De plus, pour clarifier la description et les revendications, on utilisera à titre non limitatif les expressions « supérieur », « inférieur » et « bas », « haut » en référence à la direction verticale qui est perpendiculaire au sol et en référence à la gravité terrestre.

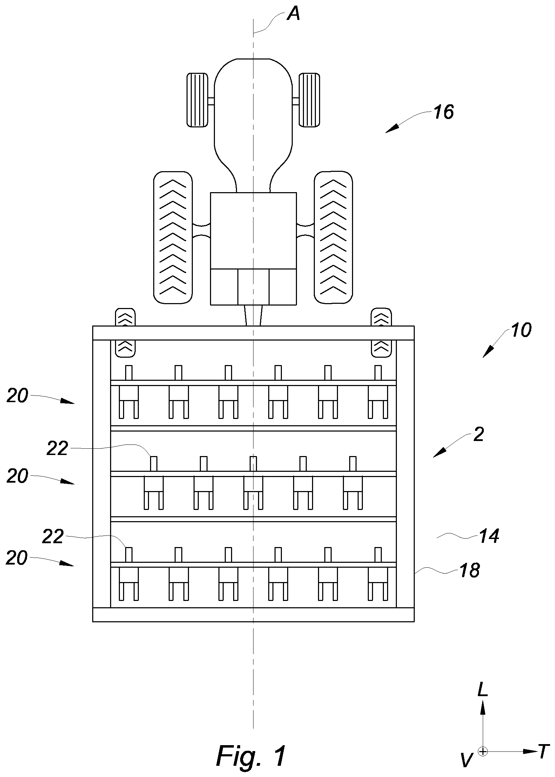

On a représenté à la figure 1 un système 10 de nettoyage des sols comportant un châssis 12 conçu pour être déplacé sur le sol 14, le sol 14 étant ici considéré horizontal.

A cet effet, le châssis 12 est tiré longitudinalement sur le sol 14 au moyen d'un tracteur 16, par exemple, selon un axe A longitudinal.

Le châssis 12, ou herse, comporte une ossature 18 métallique de forme globalement rectangulaire qui est équipée de trois rangées 20 transversales de griffes 22 conçues pour labourer le sol 14.

De plus, le châssis 12 porte une série de dispositifs d'élimination 26 des parasites présents dans le sol 14.

On entend par parasite toute sorte d'insectes, de larves ou d'oeufs présents dans le sol 14 ou sur des végétaux, comme des taupins, des larves de taupins, des oeufs de limaces, des limaces ou encore des doryphores par exemple.

Selon un premier mode de réalisation de l'invention, représentée aux figures 1 à 6, le dispositif d'élimination 26 des parasites comporte plusieurs paires d'électrodes 176 qui forment moyen d'électrocution 30 et qui sont portées par le châssis 12.

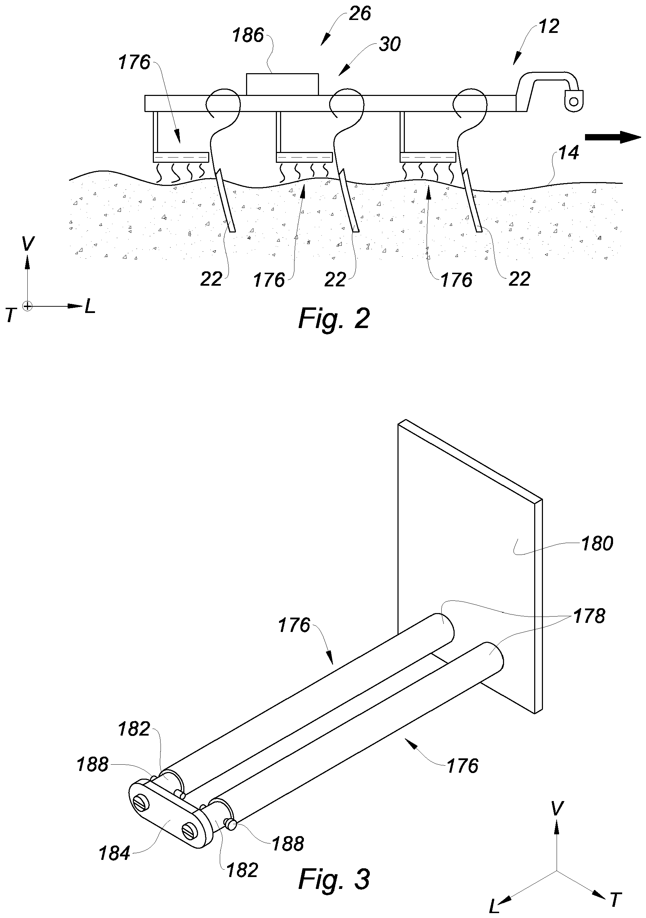

Comme on peut le voir à la figure 3, les électrodes 176 s'étendent parallèlement entre elles deux à deux, chacune depuis une première extrémité 178 montée sur une platine 180 de support réalisée en matériau isolant, jusqu'à une seconde extrémité 182 fixée sur un embout 184 réalisé en matériau isolant, comme du plastique.

Les électrodes 176 sont réalisées en matériau conducteur d'électricité, en aluminium par exemple, et elles sont agencées parallèlement au sol 14 à traiter.

Selon un exemple de réalisation préféré, les électrodes 176 présentent une longueur de 30 centimètres et un diamètre de 25 millimètres.

A titre non limitatif, les électrodes 176 peuvent se présenter sous la forme de deux lames adaptées pour pénétrer le sol, sur une profondeur comprise entre 0,5 et 2 centimètres. De préférence, les lames forment un angle compris entre 30 degrés et 60 degrés avec la surface du sol.

De même, les électrodes 176 peuvent être agencées perpendiculairement ou parallèlement à la direction d'avancement du châssis 12.

Les électrodes 176 sont alimentées en courant électrique par un dispositif d'alimentation 186 qui est composé d'une batterie, d'un convertisseur de tension, d'un générateur d'impulsion et d'un transformateur très haute tension.

La batterie fournie une tension de 24 volts continue pour une capacité de 4,5 ampère-heures par exemple.

De plus, la batterie alimente le convertisseur de tension qui transforme la tension continue en plusieurs tensions, ici cinq tensions, comprises entre 150 Volts et 550 Volts.

Le choix de tension permet d'adapter la tension de sortie en fonction des conditions, comme l'hygrométrie de l'air et la conductivité du sol par exemple. En effet, la tension disruptive de l'air sec est supérieure à celle de l'air humide.

Le convertisseur alimente le générateur d'impulsion de fréquence réglable, de 10 coups par seconde à 50 coups par seconde, par exemple, ce qui correspond à la fréquence des arcs électriques produits par les électrodes 176.

Enfin, le générateur d'impulsion est relié sur le transformateur très haute tension qui délivre aux électrodes 176 des impulsions pouvant atteindre environ 180 kilovolts pour une tension d'entrée de 550 volts. Idéalement, les impulsions atteignent 80 kilovolts.

Le transformateur est constitué d'un ou deux autotransformateurs, dont le rapport de transformation global est au maximum de 720, et idéalement de 120.

De plus, chaque électrode 176 est équipée d'un éclateur 188 conçu pour protéger la sortie du transformateur très haute tension.

En effet, chaque éclateur 188 permet de décharger l'électricité qui traverse l'électrode 176 associée en l'absence de formation d'arcs électriques, par exemple lorsque les électrodes 176 sont trop éloignées du sol.

Selon une variante, la batterie peut être remplacée par un groupe électrogène qui délivre une puissance de 300 voltampère, et une tension de 220V par exemple.

Le groupe électrogène est relié sur une alimentation qui fournit des tensions de sorties réglables entre 150 Volts et 550 Volts et qui est reliée au générateur d'impulsions.

L'invention permet d'éliminer efficacement les parasites présents dans le sol 14, comme les larves de taupins, les limaces ou les oeufs de limaces.

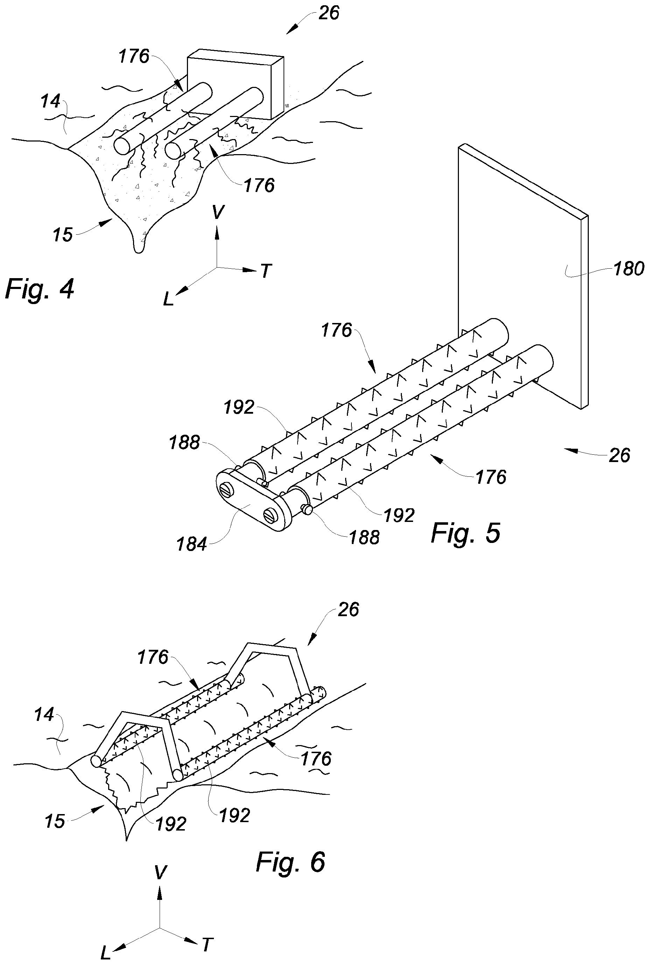

En effet, comme on peut le voir à la figure 4, les électrodes 176 sont déplacées au dessus du sillon 15 formé par le passage des griffes 22 au cours du déplacement du châssis 12, et les électrodes 176 sont alimentées en énergie de façon à délivrer des arcs électriques qui tuent les parasites présents dans le sol 14 retourné.

Selon une variante de réalisation du premier mode de réalisation de l'invention, illustrée à la figure 5, la face externe de chaque électrode 176 comporte une série de picots 192 qui sont agencés en spirales et qui présentent une extrémité libre pointue.

Selon cette variante, les picots 192 favorisent la formation des arcs électriques et orientent les arcs électriques vers le sol.

Comme on peut le voir à la figure 6, les électrodes 176 formant une paire peuvent être reliées entre elles par des supports en U inversé, pour écarter les électrodes 176 transversalement de sorte que les électrodes 176 sont déplacées le longs des bords supérieurs des sillons 15 formés par les griffes 22.

On notera que les électrodes 176 sont aussi adaptées pour désherber un sol en détruisant les bulbes des herbes soumis aux arcs électriques.

A cet effet, il est préférable d'orienter les électrodes 176 perpendiculairement à la direction d'avancement du châssis de façon à couvrir une plus grande surface.

A titre non limitatif, ce type de système 10 à électrode peut être adapté pour détruire des insectes volants, comme des frelons.

Dans ce but, des électrodes 176 sont disposées parallèlement entre elles pour former une grille, les insectes passant entre les électrodes étant électrocutés par les arcs électriques formés.

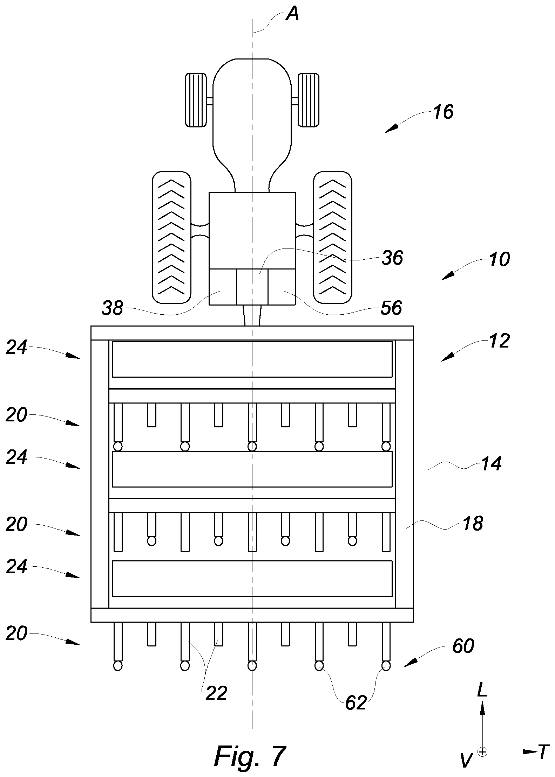

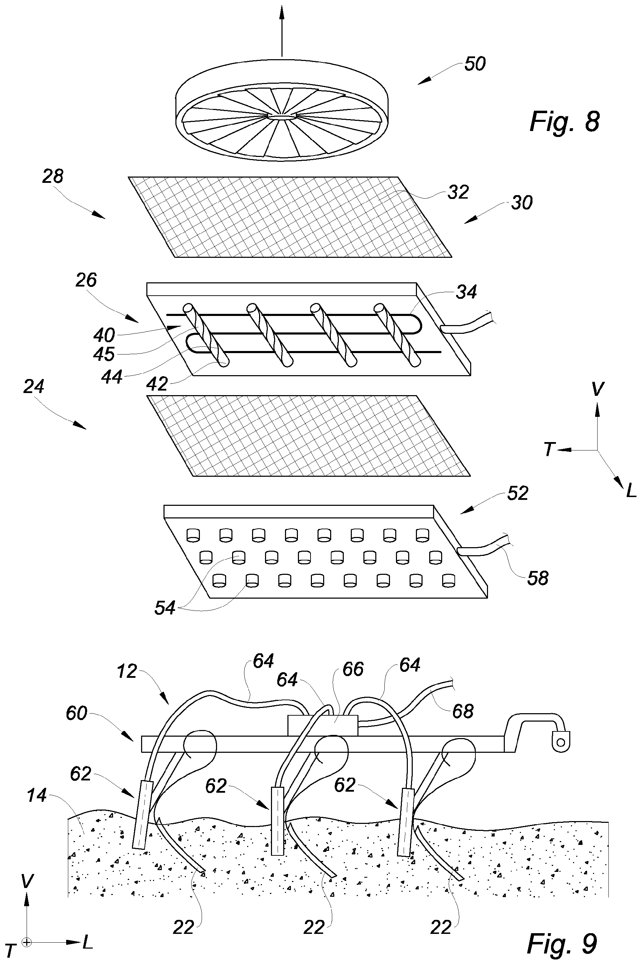

Selon un second mode de réalisation du système 10 selon l'invention, représentée aux figures 7 à 10, le châssis 12 porte trois caissons 24 transversaux, dont un est représenté en détail à la figure 8, qui sont chacun équipés d'un dispositif d'élimination 26 des parasites présents dans le sol 14, et d'un dispositif d'extraction 28 des parasites.

En référence à la figure 8, le dispositif d'élimination 26 comporte une grille 30 qui s'étend perpendiculairement au sol 14 et qui est composée d'une série de fils 32 électriques nus formant moyen d'électrocution des parasites.

De plus, le dispositif d'élimination 26 comporte une résistance électrique 34 formant moyen de chauffage du type résistif, qui émet de la chaleur vers le sol 14 afin de bruler les parasites soit par contact direct, soit par rayonnement.

La résistance 34 forme un serpentin qui s'étend dans un plan horizontal dans le caisson 24, au dessous de la grille 30 électrique.

Avantageusement, chaque caisson 24 est couvert d'un isolant, comme un aérogel, pour limiter le risque de brulures d'un opérateur par contact.

Aussi, le système 10 comporte une source d'énergie 36, représentée à la figure 7, qui est raccordée à la grille 30 et à la résistance 34 pour les alimenter en électricité.

La source d'énergie 36 peut être de tout type, notamment du type électrique, comme une batterie électrique par exemple.

Toutefois, la source d'énergie 36 peut aussi être un générateur électrique entraîné par une prise de force qui équipe le tracteur 16.

Complémentairement, le système 10 comporte une unité de commande 38, représentée à la figure 7, qui permet de commander sélectivement la grille 30 et la résistance 34 dans un état de repos ou dans un état actif.

L'unité de commande 38 permet aussi un réglage de la puissance électrique de la grille 30 et de la puissance de chauffage de la résistance 34.

Selon un autre aspect, le dispositif d'extraction 28 comporte un générateur de champ électromagnétique, qui est ici constitué par un électroaimant 40 du type solénoïde, créant un champ magnétique uniforme directionnel.

L'électroaimant 40 est composé d'une série de noyaux 42 ferromagnétiques qui sont chacun enroulés par deux fils 44 électriques en hélice formant une bobine, les fils 44 étant reliés électriquement à la source d'énergie 36.

Avantageusement, l'électroaimant 40 comporte un troisième fil 45 nu qui est enroulé autour des noyaux 42 et qui est raccordé électriquement à la source d'énergie 36, de sorte que le troisième fil 45 permet d'électrocuter les parasites par contact.

L'électroaimant 40 est commandé par l'unité de commande 38 dans un état de repos ou dans un état de travail dans lequel l'électroaimant 40 génère un champ magnétique qui extrait les parasites du sol 14 et qui les entraîne vers le dispositif d'élimination 26.

En outre, le dispositif d'extraction 28 comporte un moyen d'aspiration d'air 50 complémentaire qui est agencé au dessus du dispositif d'élimination 26, de façon à créer un flux d'air ascendant qui permet d'aspirer les parasites vers le haut jusqu'à la grille 30 et au troisième fil 45 électrique du dispositif d'élimination 26.

Le moyen d'aspiration d'air 50 est ici un ventilateur à hélice qui est commandé par l'unité de commande 38.

Enfin, le caisson 24 comporte un plateau 52 inférieur qui est équipé d'une pluralité de buses 54 d'éjection d'air chaud qui sont raccordées à un générateur d'air chaud 56, représenté à la figure 7, par un conduit 58.

Le générateur d'air chaud 56 est un compresseur d'air associé à un élément chauffant (non représenté), comme une résistance chauffante, par exemple, qui est alimentée électriquement par la source d'énergie 36.

Chaque buse 54 est agencée de façon à éjecter de l'air chaud vers le sol 14, pour désinfecter le sol et éliminer les parasites.

De plus, le plateau 52 est monté de façon amovible entre une position active représentée à la figure 8, dans laquelle le plateau 52 est agencé à une extrémité inférieure du caisson 24, au dessous de l'électroaimant 40, de façon à éjecter de l'air chaud vers le sol 14, et une position escamotée (non représentée) dans laquelle le plateau 52 libère un passage formé entre le sol 14 et l'ensemble constitué par le dispositif d'élimination 26 et le dispositif d'extraction 28.

De façon complémentaire, le système 10 est équipé d'un dispositif de désinfection 60 des sols, qui comporte une pluralité de têtes 62 d'éjection d'air chaud qui sont chacune montées sur une griffe 22 du châssis 12, comme on peut le voir à la figure 9.

Chaque tête 62 d'éjection est raccordée au générateur d'air chaud 56 par l'intermédiaire d'un premier conduit 64 qui est raccordé sur une boîte de dérivation 66.

La boîte de dérivation 66 est agencée sur le châssis 12 au voisinage des griffes 22 et elle est raccordée au générateur d'air chaud 56 par un second conduit 68 qui permet d'alimenter en air chaud chaque tête 62.

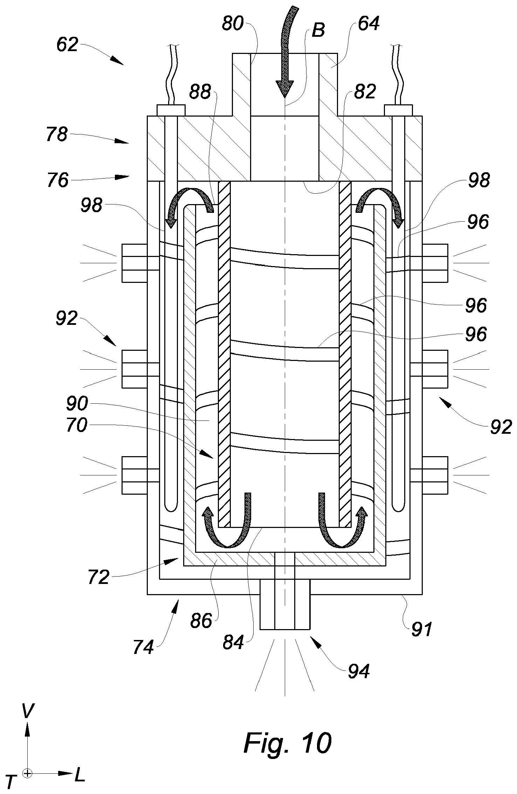

On a représenté à la figure 10 une tête 62 d'éjection d'air qui s'étend globalement verticalement selon un axe B perpendiculaire au sol 14.

Chaque tête 62 est formée essentiellement par un premier cylindre 70 intérieur, un second cylindre 72 extérieur et une coque 74 externe cylindrique, qui sont agencés de façon coaxiale selon l'axe B.

Chaque tête 62 délimite un tronçon axial supérieur 76 qui est obturé par un couvercle 78.

Le couvercle 78 délimite un orifice d'entrée d'air 80 qui débouche axialement et qui est raccordé sur le premier conduit 64 associé d'alimentation en air.

Le premier cylindre 70 s'étend axialement depuis un orifice d'entrée 82 supérieur raccordé à l'orifice 72 du couvercle 78, jusqu'à un orifice de sortie 84 inférieur.

Le second cylindre 72 est un cylindre borgne qui comporte un fond 86 radial inférieur agencé en regard de l'orifice de sortie 84 du premier cylindre 70, et un orifice de sortie 88 supérieur débouchant dans la coque 74.

Comme on peut le voir à la figure 10, le premier cylindre 70 et le second cylindre 72 délimitent entre eux un circuit 90 cylindrique de passage de l'air chaud illustré par des flèches à la figure 8.

La coque 74 forme une douille cylindrique borgne qui est délimitée par un fond 91 radial et qui enveloppe le premier cylindre 70 et le second cylindre 72.

De plus, la coque 74 est équipée d'une pluralité de buses 92 d'éjection d'air chaud qui sont agencées principalement sur la paroi cylindrique de la coque 74 de façon à éjecter l'air chaud radialement, perpendiculairement au sol 14.

Avantageusement, la coque 74 comporte une buse 94 supplémentaire qui est agencée sur le fond 91 de façon à éjecter l'air chaud axialement dans le sol 14.

Le premier cylindre 70, le second cylindre 72 et la coque 74 externe délimitent chacun sur leur face cylindrique interne une gorge 96 qui forme une spirale autour de l'axe B principal pour imprimer un mouvement hélicoïdale à l'air dans le but d'accélérer l'écoulement de l'air chaud à travers la tête 62 d'éjection.

Enfin, chaque tête 62 d'éjection comporte une paire de résistances 98 électriques chauffantes formant moyens de chauffage de l'air à une température prédéterminée.

Chaque résistance 98 s'étend axialement entre le second cylindre 72 et la coque 74 pour chauffer l'air avant d'être éjecté à travers les buses 92, 94.

A cet effet, chaque résistance est commandée par l'unité de commande 38 et raccordée électriquement à la source d'énergie 36.

Le dispositif de désinfection 60 est commandé par l'unité de commande 38 qui permet des réglages de fonctionnement, comme la pression et la température de l'air chaud éjecté, en fonction de divers paramètres comme la hauteur et la largeur des sillons formés par les griffes 22 dans le sol 14, le taux d'humidité du sol 14 ou encore la vitesse de déplacement du châssis 12.

Dans ce but, le système 10 comporte un boîtier de mesure (non représenté) qui coopère avec l'unité de commande 38 et qui comporte une sonde permettant de déterminer la hauteur et la largeur des sillons et un capteur de température permettant de connaître la température de l'air éjecté par les têtes 62 d'éjection.

Avantageusement, l'air est éjecté par les têtes d'éjection à une température avoisinant 98° Celsius afin d'éliminer les graines, les champignons pathogènes, les larves, les virus et les bactéries indésirables, en surface du sol 14 et jusqu'à environ 20 centimètres de profondeur.

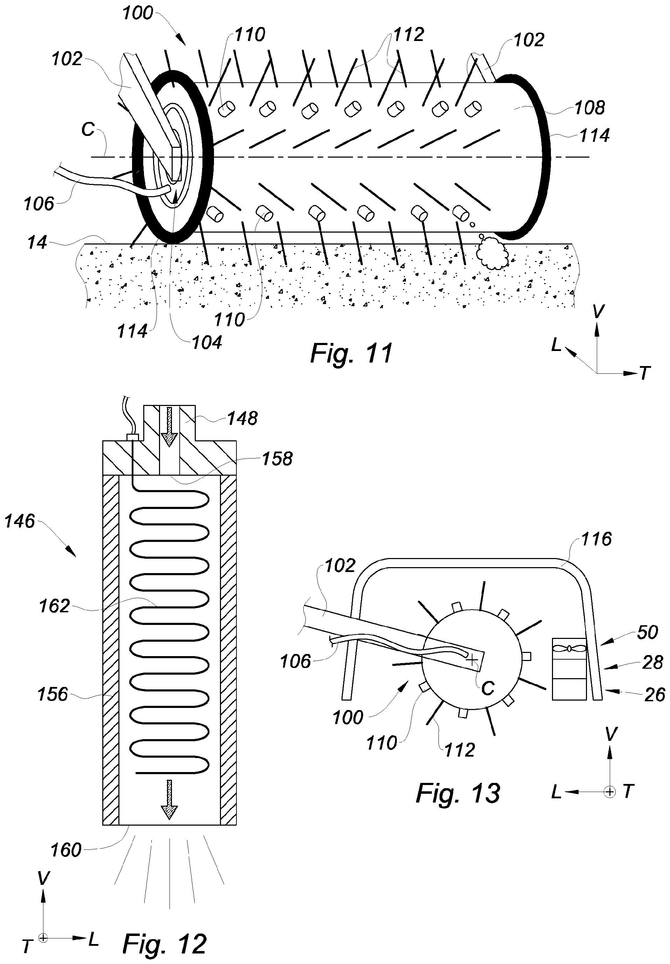

Selon un troisième mode de réalisation mais pas selon l'invention représenté à la figure 11, le châssis 12 comporte un rouleau 100 cylindrique qui s'étend selon un axe C transversal, perpendiculaire à la direction d'avancement du tracteur 16.

Le rouleau 100 est relié au tracteur 16 par une paire de bras 102 de sorte que le rouleau 100 roule sur le sol 14 autour de l'axe C transversal.

De plus, le rouleau 100 délimite un logement central 104 cylindrique d'axe C transversal qui est alimenté en air par un conduit d'alimentation 106 relié sur un générateur d'air chaud (non représenté).

Le logement central 104 est équipé d'un moyen de chauffage résistif (non représenté) comme une résistance chauffante par exemple, qui est alimentée en électricité par la source d'énergie 36.

Complémentairement, le rouleau 100 délimite une face externe 108 cylindrique qui porte une pluralité de buses 110 d'éjection d'air chaud qui sont raccordées au logement central 104 pour éjecter l'air chaud dans le sol 14.

Aussi, la face externe 108 comporte une série de dents 112 radiales qui travaillent le sol 14 pour favoriser la pénétration de l'air chaud dans le sol 14.

Avantageusement, le rouleau 100 est équipé, à chacune de ses extrémités axiales, d'un anneau 114 cylindrique d'axe C, qui coopère avec le sol 14 pour rehausser le rouleau 100 par rapport au sol 14.

On a représenté à la figure 13 le rouleau 100 équipé d'un dispositif d'élimination 26 des parasites présents dans le sol 14, et d'un dispositif d'extraction 28 des parasites, qui sont similaires au dispositif d'élimination 26 et au dispositif d'extraction 28 décrits précédemment.

Le dispositif d'élimination 26 et le dispositif d'extraction 28 sont portés par un carter 116 qui habille le rouleau 100.

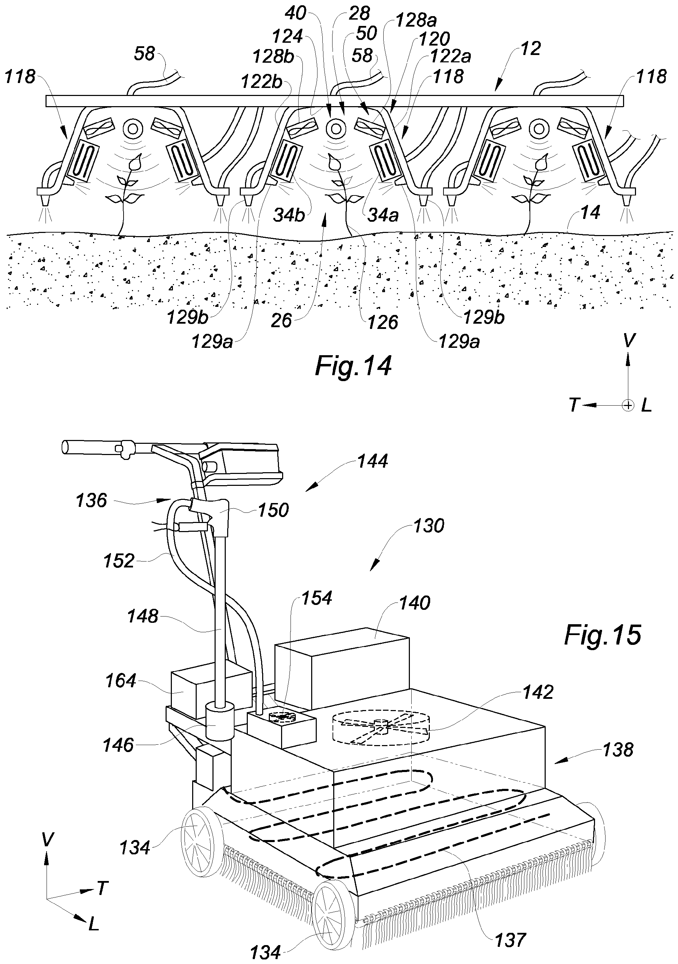

Selon un quatrième mode de réalisation mais pas selon l'invention représenté à la figure 14, le châssis 12 porte trois caissons 118 de la forme d'un tunnel qui s'étendent chacun longitudinalement selon le sens d'avancement du tracteur 16.

Chaque caisson 118 comporte un carter 120 longitudinal formant tunnel, qui est délimité par une première paroi latérale 122a et une seconde paroi verticale 122b qui sont globalement verticales et en vis-à-vis, et par une paroi supérieure 124 globalement horizontale.

Le caisson 118 est conçu pour passer au dessus d'un rang longitudinal de végétaux 126, comme on peut le voir à la figure 14.

Le carter 120 abrite un dispositif d'élimination 26 des parasites présents dans le sol 14, et un dispositif d'extraction 28 des parasites, qui sont similaires au dispositif d'élimination 26 et au dispositif d'extraction 28 précédemment décrits.

Le dispositif d'élimination 26 comporte une première résistance électrique 34a et une seconde résistance électrique 34b qui sont agencées sur la première paroi verticale 122a et sur la seconde paroi verticale 122b respectivement.

Chaque résistance électrique 34a, 34b émet de la chaleur vers les végétaux 126, notamment pour bruler par rayonnement les parasites et les larves présents sur les végétaux 126.

Avantageusement, chaque caisson 118 est couvert d'un isolant, comme un aérogel, pour limiter le risque de brulures d'un opérateur par contact.

Le dispositif d'extraction 28 comporte un électroaimant 40 qui est agencé sur la paroi supérieure 124 centrale, à l'aplomb des végétaux 126.

L'électroaimant 40 est commandé par l'unité de commande 38 dans un état de repos ou dans un état de travail dans lequel l'électroaimant 40 génère un champ électromagnétique qui extrait les parasites des végétaux 126.

De plus, l'électroaimant 40 comporte un fil nu (non représenté) qui est enroulé autour de son noyau 42 et qui est raccordé électriquement à la source d'énergie 36, de sorte que le fil électrocute les parasites par contact.

En outre, chaque caisson 118 est équipé d'un moyen d'aspiration d'air 50 complémentaire qui comporte un premier ventilateur 128a et un second ventilateur 128b qui sont agencés de part et d'autre de l'électroaimant 40, de façon à créer un flux d'air ascendant qui permet d'entraîner les parasites vers le fil nu de l'électroaimant 40 pour éliminer les parasites.

A titre non limitatif, le moyen d'aspiration d'air 50 est réversible pour former un moyen de soufflage permettant d'extraire les parasites présents sur les végétaux par soufflage.

Enfin, chaque caisson 118 est équipé d'une première série de buses 129a de soufflage qui sont alignées longitudinalement sur la première paroi verticale 122a et sur la seconde paroi verticale 122b, et qui sont orientées transversalement vers l'intérieur du caisson 118 associé, de façon à souffler de l'air chaud sur les végétaux 126.

L'air chaud est soufflé à une température avoisinant 98° Celsius sur les végétaux 126 afin d'éliminer notamment les larves et les oeufs présents sur les feuilles.

De même, chaque caisson 118 comporte une seconde série de buses 129b de soufflage qui sont alignées longitudinalement sur la première paroi verticale 122a et sur la seconde paroi verticale 122b, et qui sont orientées verticalement vers le sol 14, de façon à désinfecter et éliminer les parasites présents dans le sol 14.

Chaque buse 129a, 129b est alimentée en air chaud par un conduit 58 qui est relié sur un générateur d'air chaud du type décrit précédemment. On a représenté à la figure 15 un cinquième mode de réalisation mais pas selon l'invention qui concerne un chariot 130 conçu pour être poussé par un opérateur afin de nettoyer le sol, plus particulièrement pour désherber le sol.

A cet effet, le chariot 130 comporte un châssis (non représenté) monté sur quatre roues 134 et un guidon 136 de pilotage.

De plus, le châssis porte un élément chauffant 137 qui est composé d'une résistance chauffante, par exemple, et qui est agencé sous un capot de protection 138.

La résistance chauffante 137 s'étend horizontalement au dessus du sol et elle est alimentée électriquement par une source d'énergie, comme une batterie électrique 140 par exemple.

Complémentairement, le châssis porte un ventilateur 142 qui coopère avec la résistance chauffante 137 pour générer un courant d'air chaud vers le sol, afin de détruire les parasites présents dans le sol et les mauvaises herbes.

De plus, le chariot 130 est équipé d'une lance 144 manuelle de désherbage qui comporte une buse de soufflage 146, un canon 148, une poignée 150 de commande et un conduit d'air 152 qui alimente la buse de soufflage 146 en air.

A cet effet, le conduit d'air 152 est alimenté en air par un ventilateur auxiliaire 154 porté par le châssis.

La buse de soufflage 146, représentée en détail à la figure 15, comporte un fût 156 cylindrique qui s'étend axialement depuis un orifice d'entrée 158, jusqu'à un orifice de sortie 160.

De plus, le fût 156 renferme un élément chauffant, une résistance électrique 162 par exemple, qui est alimenté électriquement par la batterie 140 pour chauffer l'air qui traverse la buse 146.

Avantageusement, le fût 156 est isolé thermiquement par un isolant, comme un aérogel.

Aussi, le chariot 130 comporte une unité de commande 164 qui coopère avec la batterie 140, le ventilateur 142, le ventilateur auxiliaire 154 et la résistance chauffante 137 pour réguler la température de la résistance 137 et la vitesse de rotation des ventilateurs.

Ce type de chariot 130 est notamment destiné à passer entre des rangs de cultures, comme des rangs de vignes, pour désherber.

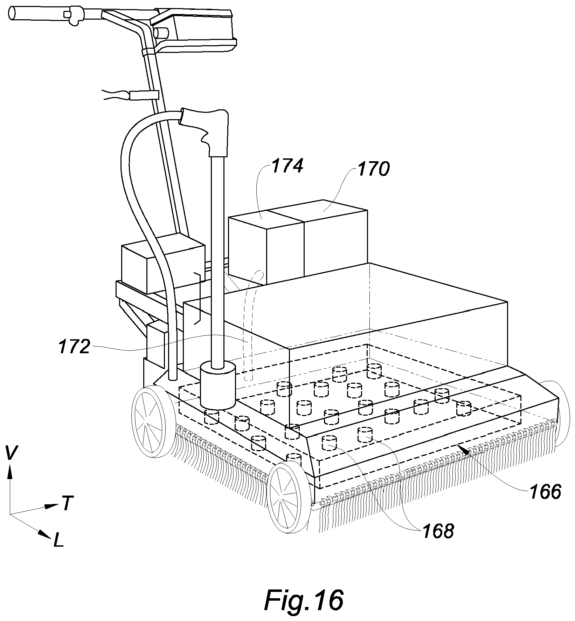

On a représenté à la figure 16 une variante de réalisation du chariot 130, qui est similaire au chariot 130 précédemment décrit mais qui comporte un caisson 166 de soufflage d'air chaud à la place de la résistance chauffante 137.

Le caisson 166 s'étend parallèlement au sol et il est équipé d'une pluralité de buses 168 d'éjection d'air chaud qui sont alimentées par un générateur d'air chaud 170, par l'intermédiaire d'un conduit 172 raccordé au caisson 166.

Le générateur d'air chaud 170 est un compresseur d'air associé à un élément chauffant (non représenté), comme une résistance chauffante, par exemple, qui est alimentée électriquement par une source d'énergie 174, comme une batterie.

Chaque buse 168 est agencée de façon à éjecter de l'air chaud vers le sol, pour désinfecter le sol et éliminer notamment les parasites et les virus.

Le chariot 130 selon cette variante de réalisation est par exemple tracté par un petit véhicule motorisé, ce véhicule peut aussi porter le générateur d'air chaud 170 et la source d'énergie 174.

La présente description de l'invention est donnée à titre d'exemple non limitatif.

On comprendra que les différents modes de réalisation et les variantes de réalisation peuvent être combinés entre eux.

## Revendications

1. Système (10) de nettoyage des sols comportant un châssis (12) conçu pour être déplacé sur le sol (14), le châssis (12) portant au moins un dispositif d'élimination (26) des parasites présents dans le sol (14), le dispositif d'élimination (26) comportant un moyen d'électrocution (30) conçu pour électrocuter les parasites, **caractérisé en ce que** le dispositif d'éilimination (26) comporte un dispositif d'extraction (28) des parasites qui est conçu pour extraire les parasites du sol (14) et les entraîner jusqu'au dispositif d'élimination (26).

2. Système 10 de nettoyage des sols selon la revendication 1, **caractérisé en ce que** le moyen d'électrocution (30) comporte au moins une électrode qui est adaptée pour être entraînée en déplacement au dessus du sol pour former des arcs électriques entre l'électrode et les parasites pour éliminer les parasites.

3. Système 10 de nettoyage des sols selon la revendication 1, **caractérisé en ce que** le moyen d'électrocution (30) comporte au moins une électrode qui est adaptée pour être entraînée en déplacement au moins en partie à l'intérieur du sol, pour former des arcs électriques entre l'électrode et les parasites pour éliminer les parasites.

4. Système (10) de nettoyage des sols selon la revendication 3, **caractérisé en ce que** le dispositif d'extraction (28) comporte un générateur (40) de champ électromagnétique.

5. Système (10) de nettoyage des sols selon la revendication 4, **caractérisé en ce que** le générateur (40) de champ électromagnétique est du type électroaimant.

6. Système (10) de nettoyage des sols selon l'une quelconque des revendications 4 ou 5, **caractérisé en ce que** le dispositif d'extraction (28) comporte au moins un moyen d'aspiration d'air (50) complémentaire qui est agencé sur le châssis (12) de façon à entraîner les parasites vers le dispositif d'élimination (26).

## Patentansprüche

1. System (10) zum Reinigen der Böden, umfassend ein Gestell (12), das dafür konzipiert ist, auf dem Boden (14) bewegt zu werden, wobei das Gestell (12) mindestens eine Vorrichtung zum Beseitigen (26) der Parasiten umfasst, die im Boden (14) vorhanden sind, wobei die Beseitigungsvorrichtung (26) ein Stromschlagmittel (30) umfasst, das dafür konzipiert ist, die Parasiten durch Stromschlag zu töten, **dadurch gekennzeichnet, dass** die Beseitigungsvorrichtung (26) eine Vorrichtung zum Herausziehen (28) der Parasiten umfasst, die dafür konzipiert ist, die Parasiten aus dem Boden (14) herauszuziehen und sie bis zur Beseitigungsvorrichtung (26) zu ziehen.

2. System 10 zum Reinigen der Böden nach Anspruch 1, **dadurch gekennzeichnet, dass** das Stromschlagmittel (30) mindestens eine Elektrode umfasst, die dafür ausgebildet ist, in Bewegung über dem Boden gezogen zu werden, um Lichtbögen zwischen der Elektrode und den Parasiten zu bilden, um die Parasiten zu beseitigen.

3. System 10 zum Reinigen der Böden nach Anspruch 1, **dadurch gekennzeichnet, dass** das Stromschlagmittel (30) mindestens eine Elektrode umfasst, die dafür ausgebildet ist, in Bewegung mindestens zum Teil im Inneren des Bodens gezogen zu werden, um Lichtbögen zwischen der Elektrode und den Parasiten zu bilden, um die Parasiten zu beseitigen.

4. System (10) zum Reinigen der Böden nach Anspruch 3, **dadurch gekennzeichnet, dass** die Herausziehvorrichtung (28) einen Elektromagnetfeldgenerator (40) umfasst.

5. System (10) zum Reinigen der Böden nach Anspruch 4, **dadurch gekennzeichnet, dass** der Elektromagnetfeldgenerator (40) vom Typ Elektromagnet ist.

6. System (10) zum Reinigen der Böden nach einem der Ansprüche 4 oder 5, **dadurch gekennzeichnet, dass** die Herausziehvorrichtung (28) mindestens ein zusätzliches Luftansaugmittel (50) umfasst, das auf dem Gestell (12) angeordnet ist, um die Parasiten zur Beseitigungsvorrichtung (26) hin zu ziehen.

## Claims

1. A system (10) for cleaning floors including a frame (12) designed to be displaced on the floor (14), the frame (12) carrying at least one device (26) for removing the parasites present in the floor (14), the removal device (26) including an electrocution means (30) designed to electrocute the parasites, **characterized in that** the removal device (26) includes a device (28) for extracting parasites which is designed to extract the parasites from the floor (14) and to drive them to the removal device (26).

2. The floor cleaning system (10) according to claim 1, **characterized in that** the electrocution means (30) includes at least one electrode which is adapted to be driven in displacement above the floor to form electric arcs between the electrode and the parasites to remove the parasites.

3. The floor cleaning system (10) according to claim 1, **characterized in that** the electrocution means (30) includes at least one electrode which is adapted to be driven in displacement at least partly inside the floor, to form electric arcs between the electrode and the parasites in order to remove the parasites.

4. The floor cleaning system (10) according to claim 3, **characterized in that** the extraction device (28) includes an electromagnetic field generator (40).

5. The floor cleaning system (10) according to claim 4, **characterized in that** the electromagnetic field generator (40) is of the electromagnet type.

6. The floor cleaning system (10) according to any one of claims 4 or 5, **characterized in that** the extraction device (28) includes at least one complementary air suction means (50) which is arranged on the frame (12) so as to drive the parasites to the removal device (26).
